# EUROPEAN PATENT APPLICATION

(11) **EP 1 002 990 A1**
(43) Date of publication of application: **24.05.2000**
(21) Application number: 99203851.3
(22) Date of filing: 18.11.1999
(51) Int. Cl.: F21V 8/00

(54) **Washing tank with illuminated internal space**

(30) Priority: 20.11.1998 IT MI980747
(71) Applicant: Athena S.r.l., 36100 Vicenza (IT)
(72) Inventor: Ciani, Carla, 36030 Valli del Pasubio, Vicenza (IT); Caimi, Maurizio, 36030 Valli del Pasubio, Vicenza (IT)
(74) Representative: Faraggiana, Vittorio, Dr. Ing.

(57) **Abstract**

Washing tank in which first optical fiber (12) ends (11) face inward to project therein light from a light source (13) located at the other end of the fibers.

## Description

The general purpose of the present invention is to make available a washing tank like that of a washbasin, sink, bath-tub et cetera with illumination.

In view of this purpose it was sought to provide in accordance with the present invention a washing tank in which first optical fiber ends face inward to project therein light from a source located at the other end of the fibers.

To clarify the explanation of the innovative principles of the present invention and its advantages compared with the prior art there is described below with the aid of the annexed drawings a possible embodiment thereof by way of non-limiting example applying said principles. In the drawings:
FIG 1 shows a diagrammatic perspective view of a washing tank in the form of a sink provided in accordance with the present invention,
FIG 2 shows a diagrammatic side elevation view of the sink of FIG 1, and
FIG 3 shows a diagrammatic view of a detail of the sink of FIG 1.

With reference to the figures a washing tank, for example a kitchen sink indicated as a whole by reference number 10 in which first ends 11 of optical fibers 12 face towards the interior of the tank to project light from a light source 13 located at the other end of the fibers is shown.

Advantageously the optical fibers 12 project the light through the tank at the side walls thereof. Also advantageously the light is projected from the proximity of the upper edge of the tank.

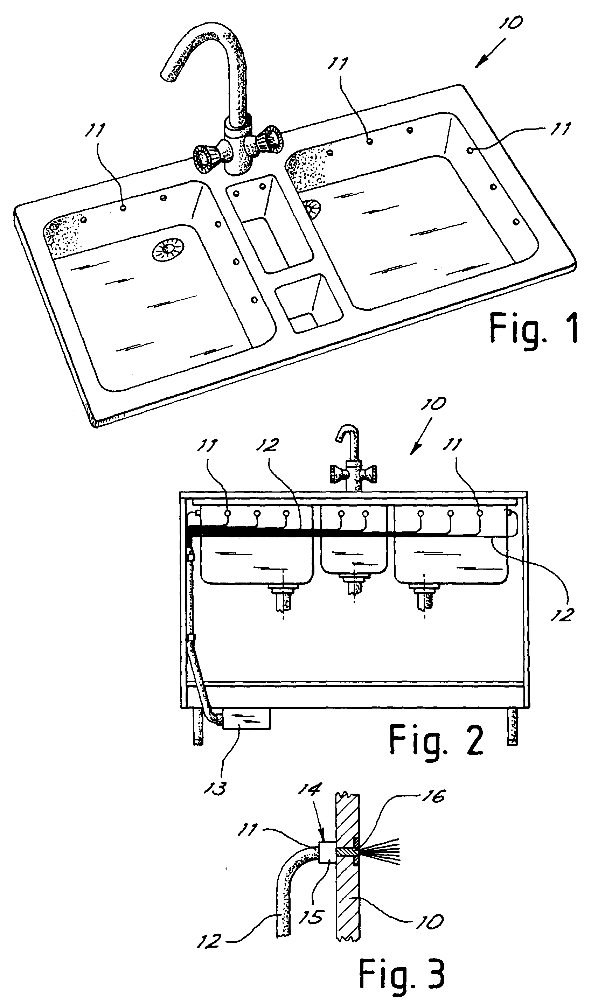

FIG 3 shows a possible embodiment of the point where the light traverses the tank conducted by the optical fiber.

An optical fiber end connector member 14 has a connector end 15 arranged towards the outside of the tank to receive the end of the fiber and a projection end 16 facing on the inner wall of the tank.

Advantageously the emission end is permanently fastened in the thickness of the tank wall, for example by gluing or even incorporation during tank production to ensure water tightness.

It is now clear that the predetermined purposes have been achieved by making available a tank with illumination of the interior space secured easily, safely and economically.

The light source can be arranged at a safe distance from the tank to avoid accidental contact between electrical and water system parts or with the user. In addition a single source can serve several optical fibers and hence produce a plurality of light emissions in the tank. Another advantage is that the emission zones can correspond with external parts of the tank difficult to reach, for example because inserted in a piece of furniture or against a wall, without causing problems if the need arises to replace the light source as would be the case for example with small projectors each with its own lamp arranged at the tank walls.

Naturally the above description of an embodiment applying the innovative principles of the present invention is given by way of non-limiting example of said principles within the scope of the exclusive right claimed here. For example the form and employment of the tank might change depending on specific exigencies.

## Claims

1. Washing tank in which first optical fiber (12) ends (11) face inward to project therein light from a light source (13) located at the other end of the fibers.

2. Tank in accordance with claim 1 characterized in that the optical fibers (12) project the light traversing the tank at its side walls.

3. Tank in accordance with claim 1 characterized in that the first ends (11) of the fibers are near the upper edge of the tank.

4. Tank in accordance with claim 1 characterized in that the optical fibers (12) face into the tank through end connector members (14) arranged with the connection end (15) facing outward from the tank and light emission ends (16) passing through the tank wall to face on its interior.

5. Tank in accordance with claim 4 characterized in that the emission end (16) is permanently fastened in the thickness of the tank wall.
